# EUROPÄISCHE PATENTANMELDUNG

(11) **EP 4 206 029 A1**
(43) Veröffentlichungstag der Anmeldung: **05.07.2023**
(21) Anmeldenummer: 22216613.4
(22) Anmeldetag: 23.12.2022
(51) Int. Cl.: B60L 53/16

(54) **LADEEINRICHTUNG FÜR EIN ELEKTROFAHRZEUG**

(30) Priorität: 31.12.2021 DE 102021006501
(71) Anmelder: Valmet Automotive Oy, 23500 Uusikaupunki (FI)
(72) Erfinder: Hollenbeck, Sven, 49492 Westerkappeln (DE); Kreiling, Nils, 49080 Osnabrück (DE)
(74) Vertreter: Kronthaler, Schmidt & Coll.

(57) **Zusammenfassung**

Es wird eine Ladeeinrichtung (5) für ein Elektrofahrzeug (1), mit einem Aufnahmeraum (8), welcher eine Ladedose (7) mit elektrischen Kontakten (9, 10) zur Koppelung mit einem Ladestecker umfasst, wobei in dem Aufnahmeraum (8) um die Ladedose (7) wenigstens ein Beleuchtungsmittel (11) angeordnet ist. Das wenigstens eine Beleuchtungsmittel bildet dabei eine flächige Beleuchtungsmaske (11), welche eine Kontur (7B) einer Außenfläche (7A) der Ladedose (7) einfasst und diese Kontur (7B) durch einen Beleuchtungsunterschied zwischen der Beleuchtungsmaske (11) im leuchtenden Zustand und der Außenfläche (7A) der Ladedose (7) hervorhebt. Des Weiteren wird ein Fahrzeug mit einer derartigen Ladeeinrichtung beschrieben.

## Beschreibung

Die vorliegende Technologie betrifft eine Ladeeinrichtung für ein Elektrofahrzeug, mit einem Aufnahmeraum, welcher eine Ladedose mit elektrischen Kontakten zur Koppelung mit einem Ladestecker umfasst, wobei in dem Aufnahmeraum um die Ladedose wenigstens ein Beleuchtungsmittel angeordnet ist.

Aus der WO 2012/116667 A2 ist eine Ladeeinrichtung für ein Elektrofahrzeug mit elektrischen Steckverbindern für ein Aufladen einer Batterie des Elektrofahrzeugs bekannt, wobei im Bereich der fahrzeugseitigen Steckverbinder in einer sogenannten Lademulde wenigstens ein Leuchtmittel und gegebenenfalls eine elektronische Steuereinrichtung vorgesehen sind. Das wenigstens eine Leuchtmittel kann eine LED-Leuchte sein, welche in einem Seitenbereich der Lademulde angeordnet ist. Die Beleuchtung kann als Anzeige für das Bestehen einer mechanischen und/oder elektrischen Verbindung an den Steckverbindern oder eines Ladezustands der Batterie dienen.

Die DE 10 2013 114 113 A1 offenbart eine Ladeeinrichtung für ein Fahrzeug, wobei eine Lampe zum Beleuchten eines Ladeverbinders in einem Ladeanschluss vorgesehen ist und das Einschalten und Ausschalten der Lampe durch eine Lichtemissions-Steuerung gesteuert wird, indem die Lampe zum Aussenden von Licht veranlasst wird, wenn z. B. eine äußere Klappe geöffnet wird, oder die Lampe ausgeschaltet wird, wenn z. B. die äußere Klappe geschlossen wird.

Es ist eine bevorzugte Aufgabe der erfindungsgemäßen Technologie, zumindest einen Nachteil von einer vorbekannten Lösung zu verringern oder zu beheben oder eine alternative Lösung vorzuschlagen. Es ist insbesondere eine bevorzugte Aufgabe der hier offenbarten Technologie, eine Ladeeinrichtung für ein Elektrofahrzeug bereitzustellen, die hinsichtlich der Beleuchtung im Bereich der Ladedose um mindestens einen der folgenden Faktoren verbessert ist: Bedienungskomfort, Herstellungskosten, Komplexität der Herstellung, Bauraumausnutzung, Betriebssicherheit, Nachhaltigkeit und/oder Bauteilzuverlässigkeit.

Weitere bevorzugte Aufgaben können sich aus den vorteilhaften Effekten der hier offenbarten Technologie ergeben.

Die Aufgabe/n wird/werden durch eine Ladeeinrichtung mit den Merkmalen des Patentanspruches 1 gelöst. Vorteilhafte Weiterbildungen sind Gegenstand der Unteransprüche sowie der nachfolgenden Beschreibung.

Es wird mithin eine Ladeeinrichtung für ein Elektrofahrzeug vorgeschlagen, die einen Aufnahmeraum aufweist, welcher eine Ladedose mit elektrischen Kontakten zur Koppelung mit einem Ladestecker umfasst, wobei in dem Aufnahmeraum um die Ladedose wenigstens ein Beleuchtungsmittel angeordnet ist. Erfindungsgemäß bildet das wenigstens eine Beleuchtungsmittel eine flächige Beleuchtungsmaske, welche eine Kontur einer Außenfläche der Ladedose einfasst und diese Kontur durch einen Beleuchtungsunterschied zwischen der Beleuchtungsmaske im leuchtenden Zustand und der Außenfläche der Ladedose hervorhebt.

Die erfindungsgemäße Ladeeinrichtung ermöglicht es, die Lage der Ladedose auch bei schlechter Lichtsituation deutlich anzuzeigen, so dass ein Einführen eines Ladesteckers für eine Bedienperson erleichtert ist.

Darüber hinaus kann eine derartige Beleuchtungsmaske den die Ladedose umgebenden Bereich in optisch ansprechender Form zur Bedienperson hin abschließen, wobei die Beleuchtungsmaske multifunktional sowohl zur Dichtung als auch zur Übermittlung von Informationen an die Bedienperson genutzt werden kann.

Um das Potential der Beleuchtungsmaske gemäß der Erfindung optimal nutzen zu können, ist es vorteilhaft, wenn die Beleuchtungsmaske mit einer Steuereinheit verbunden ist.

Dann kann die Beleuchtungsmaske dazu ausgelegt sein, zumindest in definierten Bereichen unterschiedlich starkes Licht oder kein Licht und/oder unterschiedlich farbiges Licht zu emittieren, wobei die Steuereinheit die Beleuchtungsmaske zur Ausgabe von Informationen oder Parametern durch die Beleuchtungsunterschiede zumindest in den definierten Bereichen veranlasst.

Beispielsweise können definierte Bereiche innerhalb der Beleuchtungsmaske vorgesehen sein, die zumindest zeitlich begrenzt gegenüber der übrigen Fläche der Beleuchtungsmaske stärker oder schwächer oder in einer anderen Farbe oder gar nicht leuchten, um dadurch Buchstaben und/oder Ziffern und/oder Symbole und/oder zumindest eine geometrische Form wiederzugeben.

Auf diese Weise kann die Beleuchtungsmaske ein Display-Fenster ersetzen und den in der Regel sehr begrenzten Bauraum zusätzlich zur Beleuchtung und Bedienungsführung auch zur Wiedergabe von Informationen oder Parametern mittels unterschiedlich bzw. nicht leuchtender definierter Bereiche an der Beleuchtungsmaske nutzen.

Die gesamte Beleuchtungsmaske oder die definierten Bereiche können auch blinkend vorgesehen sein, beispielsweise um eine nicht korrekte Steckverbindung anzuzeigen oder um zu signalisieren, dass ein Ladevorgang läuft oder dass ein Ladevorgang abgeschlossen ist.

Neben den erwähnten Informationen zum Zustand der Steckverbindung oder der Aktivität eines Ladevorgangs kann die Beleuchtungsmaske beispielsweise mittels Zahlen und Buchstaben auch weitere Informationen zum Ladevorgang wie z. B. eine Ladestandsanzeige oder eine verbleibende Ladedauer oder eine mögliche Reichweite des Fahrzeugs ausgeben.

Hierfür können auch geometrische Formen wie ein Balken, Bogen oder Kreis in segmentform oder in geschlossener Form um die Ladedose dienen, wobei z. B. mit Fortschreiten eines Ladezustandes ein sich erweiternder beleuchteter Bereich der jeweiligen geometrischen Form vorgesehen sein kann. Auch ein als Warnsymbol gebräuchliches Dreieck kann innerhalb der Beleuchtungsmaske dargestellt werden, um nur einige Beispiele von nützlichen geometrischen Formen zu nennen, welche mit der Beleuchtungsmaske angezeigt werden können.

Zudem können mittels Zahlen, Buchstaben und Symbolen auch Informationen zu einem Fahrzeugzustand ausgegeben werden. Hierzu zählt beispielsweise als für einen Ladevorgang relevante Information, ob eine Zündung betätigt ist, ob eine Verriegelung aktiviert ist und dergleichen.

Bei einer weiteren Ausführungsform der erfindungsgemäßen Ladeeinrichtung kann die Steuereinrichtung mit einer lichtempfindlichen Sensoreinheit verbunden sein und die Beleuchtungsmaske zur Lichtemission in Abhängigkeit von erfassten Lichtwerten der Sensoreinheit veranlassen.

Die Leuchtkraft der Beleuchtungsmaske kann beispielsweise in Abhängigkeit vom Umgebungslicht zu einer Tageszeit oder Nachtzeit erfolgen, um beispielsweise eine Sichtbarkeit bei Sonnenlicht zu gewährleisten oder einen Blendeffekt bei Dunkelheit zu vermeiden.

Wenn der Aufnahmeraum von einer sogenannten Ladeklappe im Nichtgebrauchszustand abgedeckt ist, kann mittels einer umgebungslichtsensitiven Ansteuerung der Beleuchtung der Beleuchtungsmaske eine Beleuchtungsaktivierung bei Öffnen der Klappe und ein Abschalten bei Schließen der Klappe vorgesehen sein.

Gleichwohl kann eine Information über einen Öffnungs- bzw. Schließzustand einer derartigen Klappe auch über einen Kontaktsensor oder anderen geeigneten Sensor an die Steuereinheit der Beleuchtungsmaske ausgegeben werden.

Bei einer vorteilhaften Ausführung der Erfindung kann die Beleuchtungsmaske einen Plattenkörper umfassen, welcher eine innere Öffnung aufweist, deren Kontur mit der Kontur der Außenfläche der Ladedose korrespondiert.

Ein solcher Plattenkörper kann den kompletten Aufnahmeraum außerhalb der Außenfläche der Ladedose, d. h. der einer Bedienperson ersichtlichen und dieser zugewandten Oberfläche der Ladedose, ausfüllen oder nur einen begrenzten Bereich um die Ladedose herum.

Aus der Beleuchtungstechnik sind unterschiedliche flächige Beleuchtungskörper in planer oder gebogener Ausführung bekannt, welche sich für die Ausbildung der Beleuchtungsmaske nach der Erfindung eignen. Diese können z. B. sogenannte Lambert-Strahler darstellen, deren Leuchtdichte bzw. Strahldichte nach allen Richtungen gleich ist, oder nicht vollkommen diffuse Nicht-Lambert-Strahler.

Auch kann der Fachmann je nach Anwendungsfall eine Kombination von unterschiedlichen Strahlertypen innerhalb der Beleuchtungsmaske und eine Zusammensetzung der Beleuchtungsmaske aus mehreren Plattenkörpern wählen.

Bei einer Ausführungsform der erfindungsgemäßen Ladeeinrichtung kann der Plattenkörper lichtleitend ausgebildet sein und vorzugsweise an einer Kante mit wenigstens einer Lichtquelle, insbesondere einer LED, über wenigstens einen Lichtleiter verbunden sein.

In weiteren Ausführungsformen können auch mit lichtleitenden Folien verbundene Kunststoff-Plattenkörper zum Einsatz kommen.

Ebenso ist es möglich, die Beleuchtungsmaske mit einer Mehrzahl von LED-Beleuchtungskörpern auszubilden.

Die Ladeeinrichtung nach der Erfindung eignet sich insbesondere zur Anordnung direkt an einem Fahrzeug, zweckmäßigerweise durch Anordnung des Aufnahmeraums in einer Öffnung einer Karosserie eines Fahrzeugs, womit der Aufnahmeraum eine sogenannte Lademulde bilden kann, welche durch eine Klappe bzw. einen Deckel abdeckbar ist.

Prinzipiell ist die Anordnung der Ladeeinrichtung auch an einer fahrzeugexternen Vorrichtung wie einer Ladesäule denkbar.

Wenn ein Fahrzeug mit der erfindungsgemäßen Ladeeinrichtung ausgestattet ist, kann dieses ein elektrisch antreibbares Fahrzeug mit aufladbaren Akkumulatoren darstellen, welches wenigstens eine elektrische Maschine oder auch eine Kombination aus wenigstens einer Brennkraftmaschine und wenigstens einer elektrischen Maschine als Antrieb umfasst.

Die Erfindung ist nicht auf die angegebene Kombination der Merkmale des unabhängigen Anspruches oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch Verwendung von Bezugszeichen soll den Schutzumfang der Ansprüche nicht beschränken.

Ein Ausführungsbeispiel der Erfindung wird, ohne hierauf beschränkt zu sein, anhand der Zeichnung näher erläutert.
Dabei zeigt:
- Fig. 1: eine schematische Seitenansicht eines elektrisch antreibbaren Fahrzeugs mit einer Ladeeinrichtung, und
- Fig. 2: eine stark vereinfachte Prinzipdarstellung der Ladeeinrichtung der Fig. 1 in einer Frontalansicht.

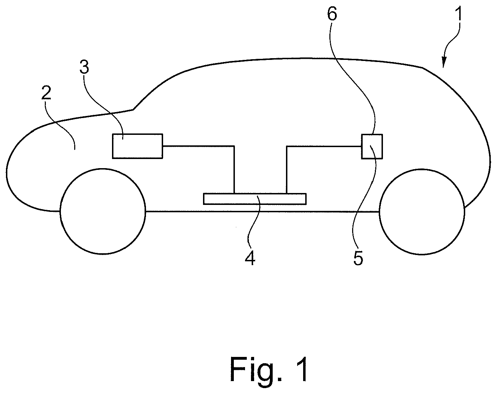

Bezug nehmend auf Fig. 1 ist ein Fahrzeug 1 mit einer Karosserie 2 und einer Antriebseinrichtung 3, die wenigstens eine elektrische Maschine oder auch eine Kombination aus wenigstens einer Brennkraftmaschine und wenigstens einer elektrischen Maschine umfassen kann, dargestellt. Zur Versorgung mit elektrischer Energie ist die Antriebseinrichtung 3 mit aufladbaren Akkumulatoren 4, vereinfacht auch als Fahrzeugbatterie bezeichnet, verbunden, welche wiederum mit einer Ladeeinrichtung 5 verbunden sind, die in einer Öffnung 6 der Karosserie 2 angeordnet ist.

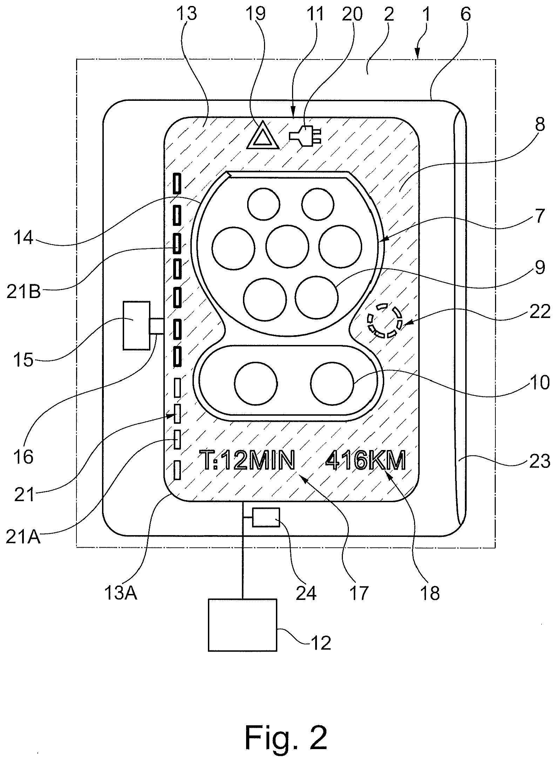

Wie der detaillierteren Darstellung der Ladeeinrichtung 5 in Fig. 2 zu entnehmen ist, weist die Ladeeinrichtung 5 einen Aufnahmeraum 8 auf, welcher sich von einer Außenfläche der Karosserie 2 in Richtung Fahrzeuginneres erstreckt und eine Art Mulde bildet, welche auch als Lademulde bezeichnet wird. In dem Aufnahmeraum 8 ist eine Ladedose 7 angeordnet, welche je nach Region und gegebenenfalls Fahrzeughersteller unterschiedlich gestaltet sein kann und elektrische Kontakte 9, 10 zur Koppelung mit einem externen, hier nicht dargestellten Ladestecker aufweist, der mit einer externen elektrischen Energiequelle, z. B. in Form einer Ladesäule, zur Energiezuführung an die Akkumulatoren 4 oder zur Energieentnahme von diesen verbindbar ist.

Im dargestellten Ausführungsbeispiel weist die Ladedose 7 eine sogenannte CSS-Konfiguration mit DC-Kontakten 9 und AC-Kontakten 10 auf, die an einer einer Bedienperson zugewandten Außenfläche 7A der Ladedose 7 angeordnet sind und sich in Richtung Fahrzeuginneres erstrecken. Die Ladedose 7 bildet einen eigenständigen Baukörper, welcher in dem Aufnahmeraum 8 versenkt, d. h. sich in Fahrzeuginnenrichtung erstreckend derart angeordnet ist, dass für eine Bedienperson in dem Aufnahmeraum 8 nur die in Fahrzeugaußenrichtung schauende Außenfläche 7A mit ihrer Kontor 7B sichtbar ist.

Um die Kontur 7B der Ladedose 7 ist ein eine Art Beleuchtungsmaske bildendes Beleuchtungsmittel 11 vorgesehen, welche die Ladedose 7 als flächige Beleuchtung vollständig derart umgibt, dass sie die Kontur 7B der Außenfläche 7A der Ladedose 7 einfasst und diese Kontur 7B durch einen Beleuchtungsunterschied zwischen der Beleuchtungsmaske 11 im leuchtenden Zustand und der Außenfläche 7A der Ladedose 7 quasi als Negativ hervorhebt. Eine Bedienperson kann somit auch bei völliger Dunkelheit ohne Schwierigkeiten einen Ladestecker in der Ladedose richtig platzieren und mit der Ladedose 7 verbinden.

Bei der gezeigten Ausführung ist die Beleuchtungsmaske 11 mit einem Plattenkörper 13 ausgebildet, welcher eine bekannte lichtleitende Kunststoffplatte sein kann, welche - in der Fig. 2 nur symbolisch angedeutet - mit einer LED 15 über Lichtleiter 16 verbunden ist.

Der Plattenkörper 13 weist eine innere Öffnung 14 auf, deren Kontur mit der Kontur 7B der Außenfläche 7A der Ladedose 7 korrespondiert, wobei zwischen der äußeren Kontur 7B der Außenfläche 7A der Ladedose und der Innenkontur des Plattenkörpers 13 auch ein Abstand z. B. für eine Dichtung vorgesehen sein kann.

Die Außenfläche 7A der Ladedose 7 kann gegenüber der umgebenden Oberfläche in dem Aufnahmeraum 8 einen Absatz bilden und der Plattenkörper kann in seiner Plattendicke so dimensioniert sein, dass die Außenfläche 7A der Ladedose 7 und der Plattenkörper 13 eine bündige Oberfläche bilden. An einem äußeren Rand 13A des Plattenkörpers 13 kann die umgebende Oberfläche des Aufnahmeraums 8 wiederum einen Absatz bilden, so dass auch zwischen dem äußeren Rand 13A des Plattenkörpers 13 und dem umgebenden Bereich in dem Aufnahmeraum 8 ein fließender Übergang besteht.

Der Plattenkörper 13 kann somit jegliche optisch gewünschte Form innerhalb des Aufnahmeraums 8 annehmen.

Alternativ kann sich der Plattenkörper 13 auch bis an den äußeren Rand des Aufnahmeraums 8 in der Fahrzeugkarosserie 2 erstrecken.

Die Beleuchtungsmaske 11 ist mit einer symbolisch in der Fig. 2 angedeuteten Steuereinheit 12 verbunden und hat außer den Funktionen der Beleuchtung und der Abzeichnung der Umrisskontur 7B der Ladedose 7 weitere Funktionen hinsichtlich der Ausgabe von Informationen bzw. Parametern z. B. zum Zustand der Steckverbindung oder zur Aktivität bzw. zum Fortschritt eines Ladevorgangs oder zu Fahrzeugzustandsangaben durch Beleuchtungsunterschiede zwischen definierten Bereichen 17, 18, 19, 20, 21, 22 und der übrigen Fläche der Beleuchtungsmaske 11.

Die Beleuchtungsunterschiede werden vorliegend durch zeitlich begrenzte Unterschiede in der Beleuchtungsintensität bewirkt, jedoch können auch unterschiedliche Beleuchtungsfarben oder nichtbeleuchtete Bereiche neben beleuchteten Bereichen zur Anwendung kommen.

Dabei können jegliche Buchstaben, Ziffern, geometrische Formen und Symbole abgebildet werden. Bei der gezeigten Ausführung ist beispielhaft eine Ausgestaltung eines definierten Bereiches unterschiedlicher Beleuchtung als Restladezeitangabe 17 mit Buchstaben, Ziffern und Syntaxzeichen gezeigt. Ein anderer definierter Bereich mit unterschiedlicher Beleuchtungsstärke stellt eine Reichweitenangabe 18 dar, ein weiterer definierter Bereich in der geometrischen Form eines Dreiecks bildet eine Warnleuchte 19, und ein weiterer definierter Bereich mit einem steckerartigen Symbol Verbindungszustandsanzeige 20 hinsichtlich einer Korrekten Verbindung der elektrischen Kontakte 9, 10.

Um innerhalb der Beleuchtungsmaske ohne separates Display-Fenster einen Ladezustand anzeigen zu können, ist ein weiterer definierter Bereich 21 als Balken mit mehreren Balkenbereichen ausgebildet, wobei z. B. beleuchtungstechnisch hervorgehobene Balkenbereiche 21A einen Ladefortschritt anzeigen und hinsichtlich der Beleuchtung nicht hervorgehobene Balkenbereiche 21B eine noch zuzuführende elektrische Ladung symbolisieren.

Es kann auch ein Taster 22 als definierter Bereich optisch mittels abweichender Beleuchtung hervorgehoben sein.

In dem gezeigten Ausführungsbeispiel ist die Öffnung 6 der Fahrzeugkarosserie, in der der Aufnahmeraum 8 angeordnet ist, durch eine Abdeckung 23, welche auch als Ladeklappe bezeichnet wird, bündig mit dem umgebenden Bereich der Fahrzeugkarosserie 2 abdeckbar.

Die Ladeklappe 23 ist vorliegend in einen seitlichen Bereich unterhalb der Karosserieaußenhaut verlagerbar und in Fig. 2 in ihrem die Öffnung 6 freigebenden Betriebszustand gezeigt. Das heißt, wenn die Ladeklappe 23 geschlossen ist, dringt kein Umgebungslicht in den Aufnahmeraum 8 im Unterschied zum geöffneten Betriebszustand der Ladeklappe 23.

Die Steuereinrichtung 12 ist bei dem gezeigten Ausführungsbeispiel mit einer lichtempfindlichen Sensoreinheit 24 verbunden, so dass die Beleuchtungsmaske 11 hinsichtlich der Lichtauskopplung ihrer Bereiche in Abhängigkeit von erfassten Lichtwerten der Sensoreinheit 24 angesteuert werden kann, wobei die Bereiche der Beleuchtungsmaske 11 in Abhängigkeit vom Umgebungslicht zu einer Tageszeit oder Nachtzeit eine Leuchtintensität aufweisen können, die sie bei Sonnenlicht zuverlässig sichtbar macht und einen Blendeffekt bei Dunkelheit verhindert.

Zudem kann, wenn die Sensoreinheit 24 kein Umgebungslicht detektiert, ein geschlossener Zustand der Ladeklappe 23 von der Steuereinheit 12 erkannt werden und eine Abschaltung der Beleuchtungsmaske 11 erfolgen.

Generell weist das Fahrzeug 1 eine innovative Ladeeinrichtung 5 auf, die mehrere Funktionen in optisch ansprechender Weise auf kleinstem Bauraum vereinigt.

### BEZUGSZEICHENLISTE

- 1: Fahrzeug
- 2: Fahrzeugkarosserie
- 3: Antriebseinrichtung
- 4: Akkumulator, Fahrzeugbatterie
- 5: Ladeeinrichtung
- 6: Öffnung
- 7: Ladedose
- 7A: Außenfläche Ladedose
- 7B: Kontur der Außenfläche der Ladedose
- 8: Aufnahmeraum
- 9: elektrischer Kontakt, DC-Kontakt
- 10: elektrischer Kontakt, AC-Kontakt
- 11: Beleuchtungsmittel, Beleuchtungsmaske
- 12: Steuereinheit
- 13: Plattenkörper
- 13A: Äußerer Rand
- 14: Öffnung
- 15: LED
- 16: Lichtleiter
- 17: definierter Bereich, Restladezeitangabe
- 18: definierter Bereich, Reichweitenangabe
- 19: definierter Bereich, geometrische Form, Warnleuchte
- 20: definierter Bereich, Symbol, Verbindungszustandsanzeige
- 21: definierter Bereich,
- 21A: definierter Bereich, hervorgehoben
- 21B: definierter Bereich, nicht hervorgehoben
- 22: definierter Bereich, Taster
- 23: Abdeckung, Ladeklappe
- 24: Sensoreinheit

## Patentansprüche

1. Ladeeinrichtung für ein Elektrofahrzeug (1), mit einem Aufnahmeraum (8), welcher eine Ladedose (7) mit elektrischen Kontakten (9, 10) zur Koppelung mit einem Ladestecker umfasst, wobei in dem Aufnahmeraum (8) um die Ladedose (7) wenigstens ein Beleuchtungsmittel (11) angeordnet ist, **dadurch gekennzeichnet, dass** das wenigstens eine Beleuchtungsmittel eine flächige Beleuchtungsmaske (11) bildet, welche eine Kontur (7B) einer Außenfläche (7A) der Ladedose (7) einfasst und diese Kontur (7B) durch einen Beleuchtungsunterschied zwischen der Beleuchtungsmaske (11) im leuchtenden Zustand und der Außenfläche (7A) der Ladedose (7) hervorhebt.

2. Ladeeinrichtung nach Anspruch 1,
**dadurch gekennzeichnet, dass** die Beleuchtungsmaske (11) mit einer Steuereinheit (12) verbunden ist.

3. Ladeeinrichtung nach Anspruch 2,
**dadurch gekennzeichnet, dass** die Beleuchtungsmaske (11) dazu ausgelegt ist, zumindest in definierten Bereichen (17, 18, 19, 20, 21, 22) unterschiedlich starkes Licht oder kein Licht und/oder unterschiedlich farbiges Licht zu emittieren, wobei die Steuereinheit (12) die Beleuchtungsmaske (11) zur Ausgabe von Informationen oder Parametern durch die Beleuchtungsunterschiede zumindest in den definierten Bereichen (17, 18, 19, 20, 21, 22) veranlasst.

4. Ladeeinrichtung nach Anspruch 3,
**dadurch gekennzeichnet, dass** die unterschiedlich bzw. nicht leuchtenden definierten Bereiche (17, 18, 19, 20, 21, 22) der Beleuchtungsmaske (11) Buchstaben und/oder Ziffern und/oder Symbole und/oder zumindest eine geometrische Form wiedergeben.

5. Ladeeinrichtung nach einem der vorhergehenden Ansprüche,
**dadurch gekennzeichnet, dass** die unterschiedlich bzw. nicht leuchtenden definierten Bereiche (17, 18, 19, 20, 21, 22) Informationen oder Parameter zu einer Steckverbindung an der Ladedose (7) und/oder einem Ladevorgang und/oder einem Ladezustand und/oder einem Fahrzeugzustands ausgeben.

6. Ladeeinrichtung nach einem der vorhergehenden Ansprüche,
**dadurch gekennzeichnet, dass** die Steuereinheit (12) mit einer lichtempfindlichen Sensoreinheit (24) verbunden ist und die Beleuchtungsmaske (11) zur Lichtemission in Abhängigkeit von erfassten Lichtwerten der Sensoreinheit (24) veranlasst.

7. Ladeeinrichtung nach einem der vorhergehenden Ansprüche,
**dadurch gekennzeichnet, dass** die Beleuchtungsmaske (11) einen Plattenkörper (13) umfasst, welcher eine innere Öffnung (14) aufweist, deren Kontur mit der Kontur (7B) der Außenfläche (7A) der Ladedose (7) korrespondiert.

8. Ladeeinrichtung nach Anspruch 7,
**dadurch gekennzeichnet, dass** der Plattenkörper (13) lichtleitend ausgebildet ist und vorzugsweise an einer Kante mit wenigstens einer Lichtquelle (15), insbesondere einer LED, über wenigstens einen Lichtleiter (16) verbunden ist.

9. Ladeeinrichtung nach einem der vorhergehenden Ansprüche,
**dadurch gekennzeichnet, dass** die Beleuchtungsmaske (11) mit einer Mehrzahl von LED-Beleuchtungskörpern ausgebildet ist.

10. Ladeeinrichtung nach einem der vorhergehenden Ansprüche,
**dadurch gekennzeichnet, dass** der Aufnahmeraum (8) zur Anordnung in einer Öffnung (6) einer Karosserie (2) eines Fahrzeugs (1) ausgebildet ist.

11. Fahrzeug (1), insbesondere elektrisch antreibbares Fahrzeug, mit einer Ladeeinrichtung (5) nach einem der Ansprüche 1 bis 10.
